# EUROPEAN PATENT APPLICATION

(11) **EP 4 101 680 A1**
(43) Date of publication of application: **14.12.2022**
(21) Application number: 21178656.1
(22) Date of filing: 09.06.2021
(51) Int. Cl.: B60L 3/00, G06F 1/26, H02J 1/10, H02M 1/00, H02M 3/335

(54) **POWER DISTRIBUTION SYSTEM, CONTROL SYSTEM, RAILWAY TRANSPORTATION SYSTEM AND METHOD FOR OPERATING A POWER DISTRIBUTION SYSTEM**

(71) Applicant: Thales Management & Services Deutschland GmbH, 71254 Ditzingen (DE)
(72) Inventor: STAN, Ovidiu, Newmarket, Ontario L3X2Z6 (CA); KLASMEIER, Holger, 70372 Stuttgart (DE)
(74) Representative: Kohler Schmid Möbus Patentanwälte

(57) **Abstract**

Power distribution system (1) for use in a control system having a 2ooN architecture with N=2 or 3 at least n controller loads (2a, 2b), the power distribution system (1) comprising:
• a common power supply source (3) providing electrical input power to the control system;
• at least n independent power channels (4a, 4b), wherein each power channel (4a, 4b) is connected to the common power supply source (3) through a power feed line (5a, 5b) and a return line (6a, 6b) and wherein each power channel (4a, 4b) is adapted to feed power to one of the controller loads (2a, 2b);
• a splitting device (7) for multiplexing the common input power to the at least two independent power channels (4a, 4b).

The inventive power distribution system enables safety channel separation and independent channels while using a common power source without the need of components having inherent failsafe properties or requiring elaborate tests.

## Description

### Background of the invention

The invention concerns a power distribution system for use in a control system having a 2ooN architecture with N=2 or 3, and at least n controller loads, the power distribution system comprising: a common power supply source providing electrical input power to the control system, at least n power channels, wherein each power channel is connected to the common power supply source through a power feed line and a return line and wherein each power channel is adapted to feed power to one of the controller loads. The invention also concerns a control system, a railway transportation system and a method for operating a power distribution system.

In conventional 2oo2 power distribution systems which supplies electrical power to two power channels via one common power source, a full wave rectifier is used to generate DC voltage from an AC input power signal to feed the power channels with electrical energy,. A disadvantage here is that transients or coupled noise through the feed lines influence both 2oo2 power channels. Yet, if both power channels perform incorrectly, it is safety critical. Thus, there should be no common cause failures CCF (i.e. a failures of multiple items resulting from a sngel cause but which would otherwise be considered independent of one another). In particular multiple failures in different channels from a single shared cause are to be omitted.
In terms of product development according to the CENELEC railway standards one of some possible architecture patterns is the 2oo2 (two out of two) or 2ooN (two out of N) principle. This pattern is one of the basic fail-safety principles effective against single faults. By the implementation of this principle mostly the required failure rates (can also be seen as tolerable hazard rate) can be achieved. To achieve low hazard rates, it is important that the redundant controllers are independent elements, i.e. if one element fails, the other element still functions properly.
For redundant Ground (Railways) Transportation Systems, the CENELEC Standard EN 50129 [02] requires "Evidence of functional and technical safety" (chapter 7.2) and the "Independence of items" (chapter B.3.2). EN50129 [02] states that due to external influences a loss of physical independence between components can be lost. Such external influences can be due to environmental influences such as EMC/EMI, power supply, etc. and could affect the system in a dangerous way, which should be prevented.
EN 50129 [02] states that independence could be lost by several types of influences as described under the following headings:
Type A Physical internal influences: If no physical connection exists between internal items of a system, there are neither physical nor functional influences. Therefore, internal independence is achieved.
Type B Functional Internal influences: A functional influence between items is based on physical connection. Measures shall be taken to avoid functional internal influences. This shall be achieved by means of functional internal independence (protection against influences of Type B)
Type C Physical external influences: A physical external influence could cause a loss of physical independence between items. This could be due to environmental stress such as EMI/EMC, power supply etc. Measures shall be taken to avoid non-intentional physical external influences.
Type D Functional external influences: A functional external influence could cause loss of functional independence between items. A functional external influence would allow faulty information from an external source to influence the system in a hazardous manner. Measures shall be taken to avoid functional external influences.
According definitions of dependent failures are also given in [03] and [04]
Power distribution in 2oo2/2oo3 redundant systems is a challenging problem to be solved with regard to the requirement of channel independence. Due to the high cost of power distribution to wayside field elements via cables, the known power distribution solution uses a common power supply, i.e. a power supply source that supplies all redundant power channels with AC or DC voltage. The required channel independence of a 2oo2 or a 2oo3 system sharing a common power input raises a number of difficulties with regard to both aspects: safety argumentation and design solution since disturbances of common power supply source (i.e. transients and surges) can influence more than one channel in the same way causing common/identical faults.

Filters are used in order to remove or attenuate transients and unwanted frequencies. Yet, filters can solve the problem only if they have inherent failsafe properties or if they are tested periodically or if their MTBF guarantees that at least one filter remains alive at the end of product life cycle or between preventive maintenance.

Conventional AC/DC converters and DC/DC converters are disclosed in [01] and [05].
In conventional power distributions, although each channel of a 2oo2 controller is equipped with a DC/DC regulator or an AC/DC power regulator, they share a common power input source. This makes safety case difficult, inconclusive and hardly convincing. Over time, vital control equipment gets denser and denser. Thus space efficient solutions are required (highly integrated systems).

### Object of the invention

It is therefore an object of the invention to provide a power distribution system, which enables safety channel separation and independent channels while using a common power source without the need of components having inherent failsafe properties or requiring elaborate tests. In particular, non-intentional physical external influences affecting both controller loads should be avoided.

### Detailed description of the invention

This object is achieved by a power distribution system according to claim 1, a control system according to claim 8, a railway transportation system according to claim 9 and a method for operating a power distribution system according to claim 10.
According to the invention, the power distribution system provides independent power channels and comprises a splitting device for multiplexing the common input power to the at least two independent power channels in order to achieve a time domain multiplexed power distribution.
The invention relates to the use in a **2ooN architecture** control system, this means that the control system is redundantly checked with a 2ooN scheme, in particular a 2oo2 or 2oo3 scheme.
The **common power supply source** is preferably an external power supply source, i.e. the power source is preferably located remote from the controller loads.

The **controller loads** are points of load/computing systems within a control circuit of the control system. The controller loads preferably control one or more safety critical elements and can be for example field element controllers, processing units, train controllers/board controllers etc.
The **splitting device** is a time multiplexing device and is adapted to provide partial input powers, i.e. it splits the input power into several partial input powers, which are time-interleaved and which can be supplied alternately to the different controller loads. Each partial input power comprises a multitude of quantities of electrical energy (discrete amount of electrical power) that are not directly sequential, i.e. there is a time gap between the different quantities of electrical energy of the respective partial input power. The second partial input power (for feeding into the second controller load) comprises different quantities of electrical energy than the quantities of electrical energy of the first partial input power (for feeding into the first controller load). The first partial input power and the second partial input power are time-interleaved. According to the invention, the power distribution system is adapted to multiplex the at least two partial input powers to the different controller loads ("time diversified independent input power").
Thus, by providing the inventive splitting device, partial input powers can be supplied to the different power channels, wherein the partial input powers are different for each channel. With the inventive power distribution system a transient or a surge of the input power is therefore only supplied to one of the power channels at a time. Thus, disturbances (in particular high vibration frequencies, spikes, over/under voltage etc.) from the common power supply source input do not affect both power channels simultaneously (common cause).

According to the invention, the input power is interrupted periodically in each power channel. With the inventive power distribution system, safety power channel separation and independence of power distribution can be achieved by a "time-domain multiplexing of the common power source", i.e. each controller load alternatingly receives discrete quantities of electrical energy), despite a physical connection of the power channels via the common power supply source. The inventive principle is simple and convincing for independent safety assessors. For safety approvals it will also make safety case and safety argumentation simpler and convincing.

### Preferred embodiments

The splitting device can be part of each power channel, i.e. can be integrated into the power channels. Each power channel then comprises a part of the splitting device. Nevertheless, it is also possible to provide the splitting device upstream to the at least two power channels, in particular remotely upstream. In case the splitting device is part of the power channels, the power channels can also be considered as "voltage regulator channels" or "converter channels", since each channel modifies/converts the input power to a partial input power, which is different for each power channel.
Preferably the N of the architecture is equal to the number of controller loads n.
In a highly preferred embodiment, the inventive power distribution system has a 2oo2 checked redundant architecture and the number of power channels is 2. In this embodiment the power source is an **AC power supply,** and the splitting device comprises two half wave rectification devices of two **half-wave rectification circuits** (one per power channel). Thus, positive half-waves of the input power can be fed to one of the controller loads and the negative half-waves can be fed to the other controller load. By using half-wave rectification circuits a simple and low cost solution can be provided. This particular implementation allows detection of all possible failures and proper safety reaction.
It is preferred that in each power channel a **reverse polarity protection device** is connected between the feed line and the return line, in particular a reverse polarity protection diode.
In order to detect the partial input powers of the respective other channel it is preferred that in each power channel a voltage sensing device is connected in parallel to the reverse polarity protection device for fault detection.

Further, it is advantageous if the feed line comprises an overcurrent protection, in particular a fuse. The reverse polarity protection device blows the overcurrent protection if the **half-wave rectification circuit** is short-circuited.
It is preferred that each feed line comprises a **reverse current barrier device,** e.g. a reverse current barrier diode. The reverse current barrier diode is preferably placed between the **half-wave rectification device** and a corresponding voltage filter/regulator/converter (e.g. a DC/DC regulator installed in front of the corresponding controller load) and prevents one power channel from influencing the other power channel via disturbances (high oscillating frequencies etc.) backwards over the power supply (exclusion of retroactive effects).
Instead of using half-wave rectification devices as splitting device, the splitting device can be a voltage chopper. The embodiment of the inventive power distribution system with a voltage chopper as splitting device is not restricted to a 2oo2 architecture, but can also be used with a 2oo3 architecture for example. With this embodiment it is possible to use both a AC power supply source and a DC power supply source.

The invention also concerns a control system for a transportation system, in particular railway transportation system, air transportation system, naval transportation system or aerospace transportation system, and a defense system having a 2ooN architecture, in particular a 2oo2 or a 2oo3 architecture and comprising a power distribution system as described before. The control system is adapted to execute a control command only if both controller loads are provided with input power of the same input power level. For this purpose the input power level of both power channels are measured and compared. In case the both input power levels differ by a minimum amount, e.g. due to a transient which is fed to one of the controller loads, the system can be put into a safe state. The control system controls an element, wherein the element to be controlled is preferably a safety critical element, e.g. a field element.

The invention also concerns a railway transportation system comprising a power distribution system as described before. The controller loads preferably control field elements e.g. point machines, signals or vehicle-on-board-controller loads (VOBC) installed in autonomous trains.

The invention also concerns a method for operating a power distribution system as described before. The inventive method comprises the following steps:
- supplying electrical energy to the at least two power channels by means of the common power supply;
- distributing quantities of electrical energy alternating in time and derived from a common power supply source, to the power channels by means of the splitting device;
According to the invention, the power supply voltage is split and time multiplexed into discrete amounts of electrical power and fed to separate power channels such that each power channel alternatively receives different quantities (discrete amounts) of electrical power/energy. In case of power line disturbances/transients only one power channel and thus only one controller is affected, thereby achieving independence of channels.
In a highly preferred variant, each quantity of electrical energy is obtained from a half-wave of a common AC-power supply. In this variant, the quantity of electrical energy is a half-wave of an AC-power supply signal. To achieve this, splitting can be carried out by means of **half-wave rectification devices, in particular** half-wave rectification diodes or by means of a chopper.
Alternatively, the quantity of electrical energy is derived from chopped signal of a DC-power supply.
It is preferred that fault detection is carried out by monitoring the voltages at the reverse polarity protection devices in each power channel. The half-waves of the input power which are not fed to the controller load of a specific power channel are fed to the reverse polarity protection diode of the specific power channel. Thus, the voltage at the reverse polarity protection device in one of the power channels is indicative for the voltage at the controller load of the other power channel. All failure modes are known and detectable, and thus fail safe response is possible.
The proposed solution show low complexity and enables to operate a redundant control system by having a fail-safe response by eliminating common failure modes caused by external physical influences through power lines (i.e. transients) by design. All failures modes are detectable. Thus, a proper safety response is possible. The described solution provides time diversified independent voltage to DC/DC regulators. The circuit of the inventive power distribution system can be easily analyzed for safety case, in particular via failure mode and effects analysis (FMEA). A redundant supervision of each power channel can be realized for fault detection.
Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Brief Description of the Drawings

The invention is shown in the drawings and will be explained in detail using exemplary embodiments.
- Fig. 1: shows a control system with a first embodiment of the power distribution system according to the invention with an AC-power supply and half-wave rectification circuits.
- Fig. 2: shows simulation plots of an input power signal, partial input power signals fed to single power channels and filtered partial input power signals fed to the controller loads by using a power distribution system according to fig. 1.
- Fig. 3: shows a control system with a second embodiment of the power distribution system according to the invention with a DC-power supply and a voltage chopper.
- Fig. 4: shows schematically a DC input power signal and partial input power signals fed to single power channels.

### Detailed Description of the Invention and Drawings

The inventive control system comprises several redundant controller loads **2a, 2b** which are powered using a power distribution system **1; 1'** with a common power supply source **3; 3'.** The controller loads 2a, 2b are powered via different power channels **4a, 4b** which are independent from each other in order to provide a safety level required for safety critical elements, in particular for railway applications. Each power channel 4a, 4b comprises a feed line **5a, 5b** and a return line **6a, 6b.**
According to the invention, an input power signal **11; 11'** is split into partial input signals **10a, 10b; 10a', 10b'** between the different power channels 4a, 4b by means of a splitting device **7; 7',** such that at any time only one power channel is powered at that specific moment. In order to ensure simultaneous operation of both controller loads 2a, 2b, the input power is split in short consecutive quantities of electrical energy **11a, 11b; 11a', 11b'** which are alternatingly supplied to the different controller loads 2a, 2b.

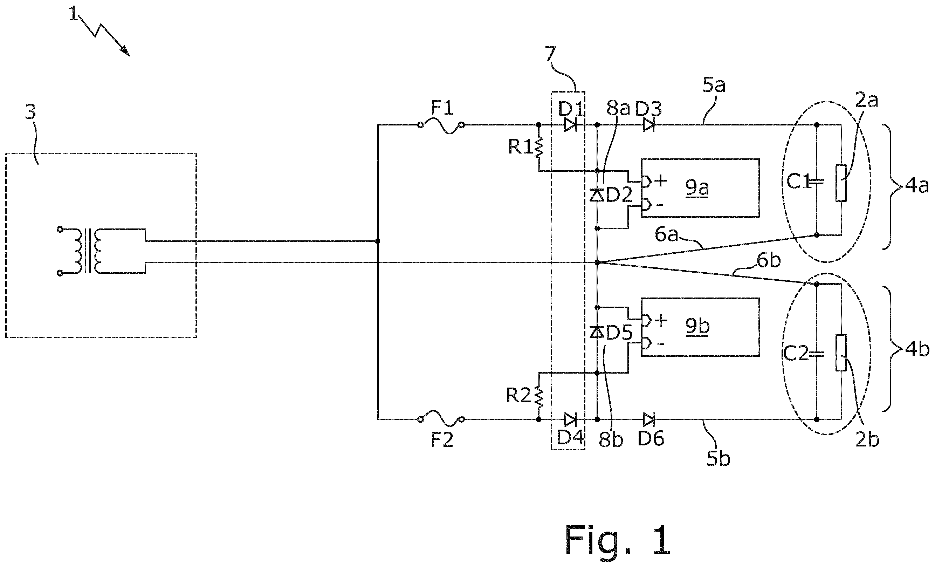

**Fig. 1** shows a first embodiment of a power distribution system 1 according to the invention with a 2oo2 architecture. The power channels 4a, 4b are fed with power by an AC power supply source 3. Each power channel 4a, 4b comprises a half-wave rectification circuit (here: comprising a half-wave rectification diode D1, D4; alternatively the half-wave rectification circuit may comprise controlled devices such as SCR(Thyristor), Transistor, Triac). The rectification diodes D1, D4 of the half-wave rectification circuits form the splitting device 7. The half-wave rectification diode D1 of power channel 4a is electrically connected in forward direction within power channel 4a while half-wave rectification diode D4 of power channel 4b is electrically connected in blocking direction within power channel 4b. This has the effect, that controller load 2a receives only positive half-waves of the input power while controller load 2b receives only negative half-waves of the input power.
For fault detection, in each power channel 4a, 4b a reverse polarity protection device **8a, 8b** (e.g reverse polarity protection diodes D2, D5) is connected between the feed line 5a, 5b and the return line 6a, 6b and a voltage sensing device **9a, 9b** is electrically connected in parallel to the reverse polarity protection device 8a, 8b. The reverse polarity protection device 8a of power channel 4a is fed with the same partial input signal 11b as controller load 2b of power channel 4b. Thus, power channel 4a monitors the partial input power signal 11b of the other power channel 4b by detecting the voltage applied to the reverse polarity protection device 8a. In the same way, power channel 4b monitors the partial input power signal 11a of the other power channel 4a by detecting the voltage applied to the reverse polarity protection device 8b. The voltage detected by the polarity protection device 8a of power channel 4a is transmitted to power channel 4b and vice versa. If there is a failure the voltage across diode 8a or 8b respectively will drop.
In order to deactivate a disturbed power channel of the power distribution system 1, a fuse F1, F2 is provided in the feed lines 5a, 5b of each power channel 4a, 4b. If the half-wave rectification diode D1 fails shorted, e.g. due to an overvoltage peak, the reverse polarity protection device D2 blows the fuse F1 and thus interrupting power supply via power channel 2a. The power interruption in power channel 4a is detected by power channel 4b as described above.
Filter elements **C1, C2** are provided in parallel connection to the controller loads 2a, 2b. Shunt Capacitors can be used as filter elements C1, C2 in order to filter the DC voltage removing the AC frequency components. This filter is the simplest one. More advanced filters can be used to obtain better DC voltage with lower ripple

In order to prevent the filtered signal from getting back to the splitting device 7, a reverse current barrier device (here blocking diodes **D3, D6)** is provided in each power channel 4a, 4b between the corresponding component D1, D4 of the splitting device 7 and the associated controller load 2a, 2b.

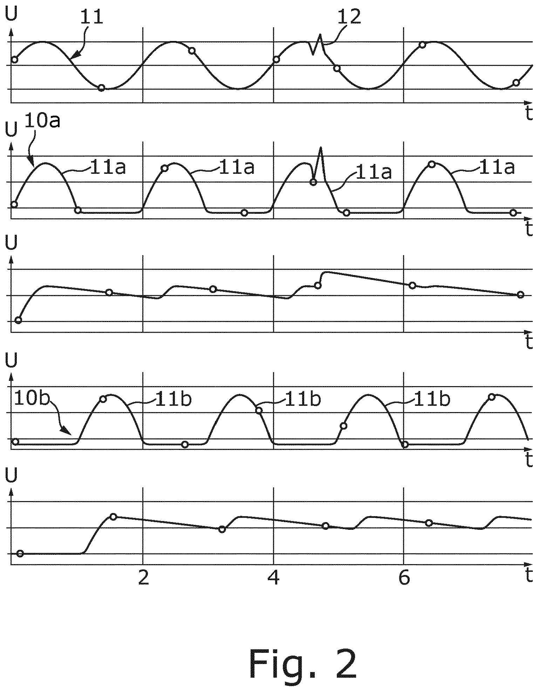

**Fig. 2** shows in diagram A an input power signal **11** comprising a signal interference (transient **12).** Further, fig. 2 shows partial input power signals **10a, 10b** of power channel 2a (diagram B) and power channel 2b (diagram D) respectively.
In accordance with the invention, the input power signal 11 is divided into quantities of electrical energy 11a, 11b, each quantity of electrical energy 11a, 11b comprising a part of the input power signal 11 during a specific time interval. In the example shown in fig. 2 the input power 11 of the shared input power supply source 3 is separated in positive half-waves **11a** and negative half-waves **11b,** each half-wave 11a, 11b forming an input quantity of electrical energy. Please note that other signal-divisions are possible. The discrete amounts of energy are fed alternately to the both power channels 4a, 4b. As a result, the partial power input signal 10a of power channel 2a comprises quantities of electrical energy 11a of the input power signal 11 (here: positive half-waves) and the partial power input signal 10b of power channel 2b comprises quantities of electrical energy 11b of the input power signal 11 (here: negative half-waves). It can be clearly seen that the transient 12 of the input power signal 11 is only present in the partial input power signal 11a of diagram B (power channel 2a), whereas the partial input power signal 11b of power channel 2b is undisturbed. Thus power channel 2b is not affected by transient 12.

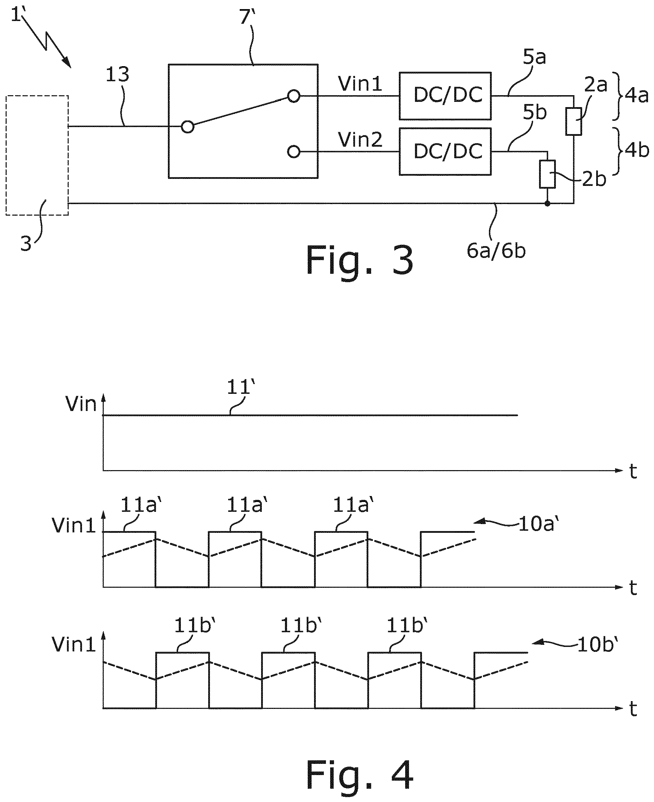

**Fig. 3** shows an alternative embodiment of the inventive power distribution system **1'** with a DC power supply source **3'** and a voltage chopper functioning as splitting device **7'.** In contrast to the embodiment shown in fig. 1 the splitting device 7' of the embodiment shown in fig. 3 is not integrated in the single power channels 4a, 4b, but in a common supply line **13.** The input power signal **11'** (Vin) is split upstream to the redundant power channels 4a, 4b. The voltage chopper 7' switches the electrical connection of the input power source 3' alternately to the power channels 4a, 4b, thereby generating quantities of electrical energy **11a', 11b',** as shown in **fig. 4****.** A step down DC/DC regulator converts DC input voltage level of the partial input signals 10a, 10b; 10a', 10b' to a lower voltage level (amplitude). Each quantity of electrical energy 11a', 11b' is fed only to one of the power channels 4a, 4b. The effect is the same as described above with reference to fig. 1 and fig. 2. The voltage obtained after filtering the electrical energy **11a', 11b'** in order to extract the DC voltage component only, is indicated as zigzag line in fig. 4.
Although a DC power supply source 3' and two redundant power channels 4a, 4b are described with the embodiment of fig. 3 it should be noted that the embodiment shown in fig. 3 is neither limited to DC power supply nor to a specific number of redundant power channels 4a, 4b. AC power supply as well as more than two power channels can be provided with the power distribution system 1'.

Due to the inventive design of the described power distribution system 1; 1', failures arising from the power supply source 3; 3' do not influence both controller loads 2a, 2b, although a common power supply source 3; 3' is used to power both controller loads 2a, 2b.

### List of reference numbers

- 1; 1': power distribution systems
- 2a, 2b: controller loads
- 3; 3': power supply sources
- 4a: first power channel
- 4b: second power channel
- 5a: first feed line
- 6a: first return line
- 5b: second feed line
- 6b: second return line
- 7;: splitting device (half-wave rectification devices)
- 7': splitting device (voltage chopper)
- 8a, 8b: reverse polarity protection devices
- 9a, 9b: voltage sensing devices
- 10a, 10b: partial input signals of input power generated by splitting device 7
- 10a', 10b': partial input signals of input power generated by splitting device 7'
- 11; 11': input power signals
- 11a; 11b: quantities of electrical energy of input power (half-waves) generated by splitting device 7
- 11a'; 11b': quantities of electrical energy of input power generated by splitting device 7'
- 12: transient
- 13: common supply line
- C1, C2: DC filter
- D1, D4: half-wave rectification diodes of splitting device 7
- D2, D5: reverse polarity protection diodes of reverse polarity protection device
- D3, D6: Reverse current barrier diodes for DC filters C1, C2
- F1, F2: overcurrent protections (e.g fuses)

### List of references:

[01] ON Semiconductor "Switch-Mode Power Supply Reference Manual" SMPSRM/D Rev. 4 04. April 2014
[02] EN 50129-2018 - Railway Applications - Communications, signalling and processing systems - safety related electronic systems for signalling Chapter 7.2 - The technical Safety Report - S.44-55
   Chapter B3.2 - Influences between items - S. 81-86
[03] Dipl. Ing. Peter Tummeltshammer Dissertation: Analysis of Common Cause Faults in Dual Core Architectures, submitted to Technische Universität Wien, Fakultät für Informatik. Matrikelnummer: 9825668, Simmeringer Hauptstr. 16/3/16, A-1110 Wien, Osterreich
[04] Giuseppe Mauri. Integrating safety analysis techniques, supporting identication of common cause failures. PhD thesis, University of York, Department of Computer Science, 2000
[05] Michrochip Techology Incorporated Microchip WebSeminars "dsPIC Digital Signal Controller_Introduction to Switch Mode Power Supplies (SMPS)" 2006

## Claims

1. Power distribution system (1; 1') for use in a control system having a 2ooN architecture with N=2 or 3 and at least n controller loads (2a, 2b),, the power distribution system (1; 1') comprising:
• a common power supply source (3; 3') providing electrical input power to the control system;
• at least n independent power channels (4a, 4b), wherein each power channel (4a, 4b) is connected to the common power supply source (3; 3') through a power feed line (5a, 5b) and a return line (6a, 6b) and wherein each power channel (4a, 4b) is adapted to feed power to one of the controller loads (2a, 2b);
• a splitting device (7; 7') for multiplexing the common input power to the at least two independent power channels (4a, 4b).

2. Power distribution system (1) according to claim 1, **characterized in that** the system has a 2oo2 checked redundant architecture and the number of power channels is two, that the power supply source (3) is an AC power supply, and that the splitting device (7) comprises two half-wave rectification circuits, one per power channel (4a, 4b).

3. Power distribution system (1) according to claim 2, **characterized in that** in each power channel (4a, 4b) a reverse polarity protection device (8a, 8b) is connected between the feed line (5a, 5b) and the return line (6a, 6b), in particular a reverse polarity protection diode (D2, D5).

4. Power distribution system (1) according to claim 3, **characterized in that** in each channel a voltage sensing device (9a, 9b) is connected in parallel to the reverse polarity protection device (8a, 8b) for fault detection.

5. Power distribution system (1) according to any one of the claims 1 through 4, **characterized in that** the feed line comprises an overcurrent protection, in particular a fuse.

6. Power distribution system (1) according to any one of the claims 2 through 5, **characterized in that** each feed line comprises a reverse current barrier device, in particular a reverse current barrier diode.

7. Power distribution system (1') according to claim 1, **characterized in that** the splitting device is a voltage chopper.

8. Control system for a railway transportation system, **characterized in that** the control system has a 2002 or a 2003 architecture and comprises at least n controller loads and a power distribution system (1; 1') according to one of the claims 1 through 7.

9. Transportation system, in particular railway transportation system, air transportation system, naval transportation system or aerospace transportation system, comprising a power distribution system (1; 1') according to any one of the claims 1 through 7.

10. Defense system comprising a power distribution system (1; 1') according to any one of the claims 1 through 7.

11. Method for operating a power distribution system (1; 1') according to any one of the claims 1 through 7, comprising the following steps:
• supplying electrical energy to the at least two power channels(4a, 4b) by means of the common power supply (3; 3');
• distributing quantities of electrical energy (11a, 11b; 11a', 11b') alternating in time and derived from the common power supply source (3; 3'), to the power channels (4a, 4b) by means of the splitting device (7; 7').

12. Method according to claim 10, **characterized in that** each quantity of electrical energy (11a, 11b) is derived from a half-wave of a common AC-power supply (3).

13. Method according to claim 10, **characterized in that** the quantity of electrical energy (11a, 11b) is derived from chopped signal of a DC-power supply (3).

14. Method according to any one of the claims 10 through 12, **characterized in that** fault detection is carried out by monitoring the voltages at the reverse polarity protection devices (8a, 8b) in each power channel (4a, 4b).
